(19) Europäisches Patentamt
European Patent Office
Office européen des brevets

(11) **EP 1 825 276 B1**

(12) **EUROPÄISCHE PATENTSCHRIFT**

(45) Veröffentlichungstag und Bekanntmachung des Hinweises auf die Patenterteilung:
**16.04.2008   Patentblatt 2008/16**

(21) Anmeldenummer: **05813019.6**

(22) Anmeldetag: **16.11.2005**

(51) Int Cl.:
*G01P 3/80* (2006.01)      *G01P 3/68* (2006.01)
*G01S 11/12* (2006.01)      *G06T 7/20* (2006.01)

(86) Internationale Anmeldenummer:
**PCT/DE2005/002047**

(87) Internationale Veröffentlichungsnummer:
**WO 2006/063546 (22.06.2006 Gazette 2006/25)**

(54) **VERFAHREN UND VORRICHTUNG ZUR ERMITTLUNG EINER FAHRZEUGGESCHWINDIGKEIT**

METHOD AND DEVICE FOR DETERMINING THE SPEED OF A VEHICLE

PROCEDE ET DISPOSITIF POUR DETERMINER LA VITESSE D'UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.12.2004   DE 102004060402**

(43) Veröffentlichungstag der Anmeldung:
**29.08.2007   Patentblatt 2007/35**

(73) Patentinhaber:
• **A.D.C. Automotive Distance Control Systems GmbH**
  **88131 Lindau (Bodensee) (DE)**
• **AUDI AG**
  **85045 Ingolstadt (DE)**

(72) Erfinder:
• **KRÖKEL, Dieter**
  **88097 Eriskrich (DE)**

• **FECHNER, Thomas**
  **88079 Kressbronn (DE)**
• **RIEDEL, Helmut**
  **86697 Oberhausen (DE)**
• **GRÜNLEITNER, Holger**
  **85051 Ingolstadt (DE)**
• **THIEL, Robert**
  **01705 Freital (DE)**

(74) Vertreter: **Büchner, Jörg**
  **Conti Temic microelectronic GmbH**
  **Sieboldstr. 19**
  **90411 Nürnberg (DE)**

(56) Entgegenhaltungen:
**DE-C1- 19 507 957          FR-A- 2 609 174**
**JP-A- 8 094 380            US-A1- 2004 221 790**

EP 1 825 276 B1

**Beschreibung**

Die Erfindung betrifft ein Verfahren zur Ermittlung einer Geschwindigkeit eines Fahrzeugs.

In Fahrzeugen wird normalerweise die Geschwindigkeit indirekt über die Raddrehzahl gemessen. Zur Drehzahlerfassung werden üblicherweise Induktivgeber oder Hallsensoren eingesetzt. Induktivgeber oder Drehzahlfühler nach dem Induktionsprinzip sind passive Fühler, die ein zur Drehzahl proportionales Spannungssignal liefern. Der Drehzahlfühler tastet eine Impulsscheibe ab. Da die Bewegung der Impulsscheibe Voraussetzung für die Spannungserzeugung des Sensors ist, lässt der passive Drehzahlfühler keine Nullgeschwindigkeitsmessung zu. Hallsensoren sind aktive Drehzahlfühler, die auf dem Hall-Effekt basieren oder das magnetoresistive Prinzip nutzen. Diese Sensoren können bereits ein Nullgeschwindigkeitssignal abgeben.

Beiden Sensoren ist gemeinsam, dass in Grenzsituationen, wie zum Beispiel Schleudern, Bremsen oder Rutschen, die indirekt anhand der Raddrehzahl gemessene Geschwindigkeit nicht mit der wahren Geschwindigkeit über Grund übereinstimmt. Der wahre Geschwindigkeitsvektor kann nur unzureichend über die Raddrehzahl bestimmt werden. Auch bei sehr langsamer Fahrt wie "Stop and Go" wird die Geschwindigkeit über die Raddrehzahl zu ungenau gemessen. Für Fahrerassistenzsysteme wie einen Stauassistenten ist aber die genaue Geschwindigkeit unbedingt erforderlich, um die Aktuatorik richtig anzusteuern.

Auf optischer Basis existiert ein System der Firma CORRSYS-DATRON, das über gekreuzte Gitter den Untergrund abtastet und durch Korrelationsauswertung sehr genau den wahren Geschwindigkeitsvektor bestimmen kann (VDI-Berichte 1731, 2003, S.25ff, "Gitteroptische Sensorik zur berührungslosen Längs-und Quergeschwindigkeitsmessung", J. Haus, R. Schäfer). Dies System ist zur Referenzmessung am Markt etabliert, findet aber wegen des hohen Kostenaufwands keine Anwendung für die Geschwindigkeitsmessung während des regulären Fahrbetriebs. Weiterhin sind als Stand der Technik die im Folgenden aufgeführten Schriften bekannt.

Die Patentanmeldung US 2004/0221790 A1 beschreibt ein Fahrzeug mit einer Vorrichtung zur Messung einer zurückgelegten Distanz. Dazu wird eine Kamera direkt auf den Untergrund gerichtet und es werden zumindest zwei Bilder des Untergrunds zeitlich versetzt aufgenommen. Durch Vergleich der Bilder wird auf die zurückgelegte Distanz geschlossen. Eine Vorrichtung zur Bestimmung der Geschwindigkeit wird in der Offenlegungsschrift FR-A-2609174 angegeben. Die Vorrichtung umfasst eine Kamera, die mehrere Bilder zeitlich versetzt aufnimmt. Aus den Bildern wird mittels einer Korrelationsfunktion eine zurückgelegte Distanz bzw. Rotation berechnet.

Die Patentschrift DE 19507957 C1 offenbart ein Fahrzeug mit optischer Abtasteinrichtung für einen seitlichen Fahrbahnbereich. Mit dieser Vorrichtung soll die Fahrspur erkannt und eine oder mehrere Funktionen zur Warnung bei Einschlafen, Verlassen der Fahrspur etc. bereitgestellt werden.

Die Schrift JP 08094380 beschreibt ein Kraftfahrzeug mit einer Kamera die auf die seitliche Fahrbahn gerichtet wird. Es wird der unterbrochene Mittelstreifen der Fahrbahn im Bild selektiert. An einem Punkt Q im Bild wird das alternierende Intensitätsprofil (Markierung, keine Markierung) über der Zeit aufgenommen. Mittels einer angenommenen, durchschnittlichen Markierungslänge wird aus der Intensitätsfunktion über der Zeit der zurückgelegte Weg des Fahrzeugs berechnet.

Der Erfindung liegt daher die Aufgabe zugrunde, ein verbessertes Verfahren und eine Vorrichtung anzugeben, die mit geringem Aufwand eine Ermittlung einer Geschwindigkeit eines Fahrzeugs ermöglichen.

Erfindungsgemäß wird die Aufgabe durch ein Verfahren, welches die in Anspruch 1 angegebenen Merkmale aufweist, und durch eine Vorrichtung, welche die in Anspruch 8 angegebenen Merkmale aufweist, gelöst.

Vorteilhafte Weiterbildungen der Erfindung sind Gegenstand der abhängigen Ansprüche.

In dem erfindungsgemäßen Verfahren werden mindestens zwei Bilder einer Fahrzeugumgebung mittels einer horizontal ausgerichteten Monokamera des Fahrzeugs zeitlich nacheinander aufgenommen, wobei zwischen den Bildern Veränderungen einer Lage und/oder einer Größe wenigstens einer in den Bildern zumindest teilweise enthaltenen Fahrbahnmarkierung, die mindestens ein Ende eines Mittelliniensegments enthält, ermillelt werden und aus den Veränderungen eine Geschwindigkeit des Fahrzeugs relativ zu der Fahrbahnmarkierung und über Grund bestimmt wird. Dieses Verfahren ermöglicht eine einfache Bestimmung der Geschwindigkeit des Fahrzeugs über Grund mittels einer bereits im Fahrzeug vorhandenen Monokamera. Zusätzliche Kameras sind nicht erforderlich. Die Genauigkeit der über Grund ermittelten Geschwindigkeit wird lediglich durch die Auflösung der verwendeten Kamera begrenzt.

Veränderungen an der Lage und/oder Größe der Fahrbahnmarkierung sind aus den Bildern einfach und genau ermittelbar. An den Enden eines Mittelliniensegments ist der Kontrast zur Fahrbahn sehr hoch. Dadurch ist die Lage und/oder die Größe der Enden von wiederkehrenden Mittelliniensegmenten und daraus resultierend deren Veränderungen in einer Bildfolge besonders einfach und genau bestimmbar.

Vorteilhafterweise wird als Geschwindigkeit über Grund eine Längs- und/oder eine Quergeschwindigkeit des Fahrzeugs ermittelt. Diese Geschwindigkeiten sind für andere Fahrzeugfunktionen wie Fahrerassistenzsysteme zur Steuerung und/oder Regelung verwendbar, so dass für diese Systeme ein möglichst genauer Geschwindigkeitswert zur Verfügung steht.

Eine bevorzugte Ausführungsform sieht vor, dass, falls mehrere gleichartige Objekte in den Bildern enthalten sind, Fehler der Veränderungen von jedem der gleichartigen Objekte ermittelt werden. Zur Ermittlung der Geschwindigkeit wird zweckmäßigerweise dasjenige Objekt verwendet, dessen Veränderung den geringsten Fehler aufweist. Auf diese Weise ist die Genauigkeit der ermittelten Geschwindigkeit optimiert.

Für eine einfache Ausgestaltung wird anhand der Veränderungen des Objekts ein Geschwindigkeits- oder Bewegungsvektor des Fahrzeugs relativ zu dem Objekt ermittelt. Mittels des Bewegungsvektors wird anschließend die Geschwindigkeit mit besonders hoher Genauigkeit einfach und schnell bestimmt. Dazu wird in einer möglichen Ausführungsform der Bewegungsvektor anhand einer Kalibrierung der Kamera perspektivisch korrigiert und skaliert.

Eine bevorzugte Ausgestaltung sieht vor, die Bilder zum Identifizieren und/oder Lokalisieren des Objekts und/oder der Veränderungen zu filtern. Dieser einfache Bildverarbeitungsschritt ermöglicht ein schnelles und genaues Identifizieren und/oder Lokalisieren des Objekts. Vorzugsweise wird ein Hochpassfilter verwendet, der zum Finden von Kanten, z. B. den Enden der Fahrbahnmarkierung besonders geeignet ist.

Vorzugsweise werden Bilder aus einer fortlaufend hintereinander aufgenommenen Bildfolge verwendet. Hierdurch ist sichergestellt, dass fortlaufend und möglichst in Echtzeit ein Geschwindigkeitswert mit möglichst hoher Genauigkeit bestimmt wird.

Eine Ausgestaltung des Verfahrens zur Ermittlung der Geschwindigkeit mit hoher Genauigkeit und möglichst in Echtzeit sieht vor, dass die Veränderungen des Objekts aus zwei unmittelbar aufeinander folgenden Bildern ermittelt werden. Die ermittelte Geschwindigkeit steht auf diese Weise schnellstmöglich zur Verfügung. Zudem ist eine Ungenauigkeit durch mögliche Geschwindigkeitsunterschiede in der Zeit zwischen den Aufnahmen der Bilder gering.

Zur Aufnahme wird eine wenigstens teilweise horizontal ausgerichtete Kamera verwendet. Dabei verläuft wenigstens eine der drei Raumachsen der Kamera horizontal. Dadurch stehen in den Bildern optische Informationen von einer Fahrzeugumgebung vor und/oder hinter dem Fahrzeug zur Verfügung. In dieser Fahrzeugumgebung sind zeitliche Veränderungen durch Kontraste gut ermittelbar.

Eine weitere Ausführungsform sieht vor, dass als Kamera eine Kamera eines Spurverfolgungssystems und/oder eine Rückfahrkamera und/oder eine Kamera für einen toten Winkel verwendet wird. Hierbei kann das Verfahren auch bei einer bereits vorhandenen Kamera in einem Fahrzeug nachgerüstet werden. Es ist keine zusätzliche Hardware erforderlich.

Die erfindungsgemäße Vorrichtung weist eine Kamera eines Fahrzeugs und eine mit der Kamera verbundene Auswerteeineit auf, wobei mittels der Auswerteeinheit zwischen zwei zeitlich nacheinander aufgenommenen Bildern der Kamera Veränderungen der Lage und/oder der Größe wenigstens einer in den Bildern zu mindest teilweise enthaltenen Fahrbahnmarkierung, die mindestens ein Ende eines Mittelliniensegments enthält. ermittelbar sind, wobei aus den Veränderungen eine Geschwindigkeit des Fahrzeugs relativ zu der Fahrbahnmarkierung und über Grund bestimmbar ist.

Insbesondere für eine Nachrüstung des Verfahrens in ein Fahrzeug wird als Kamera eine bereits vorhandene Kamera eines Spurverfolgungssystems und/oder eine Rückfahrkamera und/oder eine Kamera für einen toten Winkel verwendet. Alternativ oder zusätzlich kann eine separate Kamera zur Ermittlung der Geschwindigkeit vorgesehen sein. Dabei ist die Kamera bevorzugt mit teilweise horizontaler Ausrichtung in Fahrtrichtung nach vorne und/oder nach hinten am Fahrzeug angeordnet.

Die mit der Erfindung erzielten Vorteile bestehen insbesondere darin, dass durch die Ermittlung der Geschwindigkeit des Fahrzeugs anhand von Veränderungen eines zur Fahrzeugumgebung, insbesondere zum Untergrund unbeweglichen, entlang des Fahrwegs wiederkehrenden oder kontinuierlichen auftretenden Objekts in einfacher Art und Weise die Geschwindigkeit über Grund ermittelt wird. Durch die Ermittlung der Geschwindigkeit über Grund ist ein weitgehend genauer Geschwindigkeitswert gegeben, der zur Steuerung und/oder Regelung anderer Betriebsfunktionen des Fahrzeugs verwendet werden kann. Darüber hinaus kann das Verfahren nachgerüstet werden. Hierbei werden bereits vorhandene Kameras verwendet.

Ausführungsbeispiele der Erfindung werden anhand von Zeichnungen näher erläutert. Darin zeigen:

Fig. 1a, 1b    zwei zeitlich nacheinander aufgenommene Bilder einer vorwärts gerichteten Kamera eines fahrenden Fahrzeugs,

Fig. 2    die beiden Bilder in einer überlagerten Darstellung und

Fig. 3    ein hochpassgefiltertes Bild.

Einander entsprechende Teile sind in allen Figuren mit den gleichen Bezugszeichen versehen.

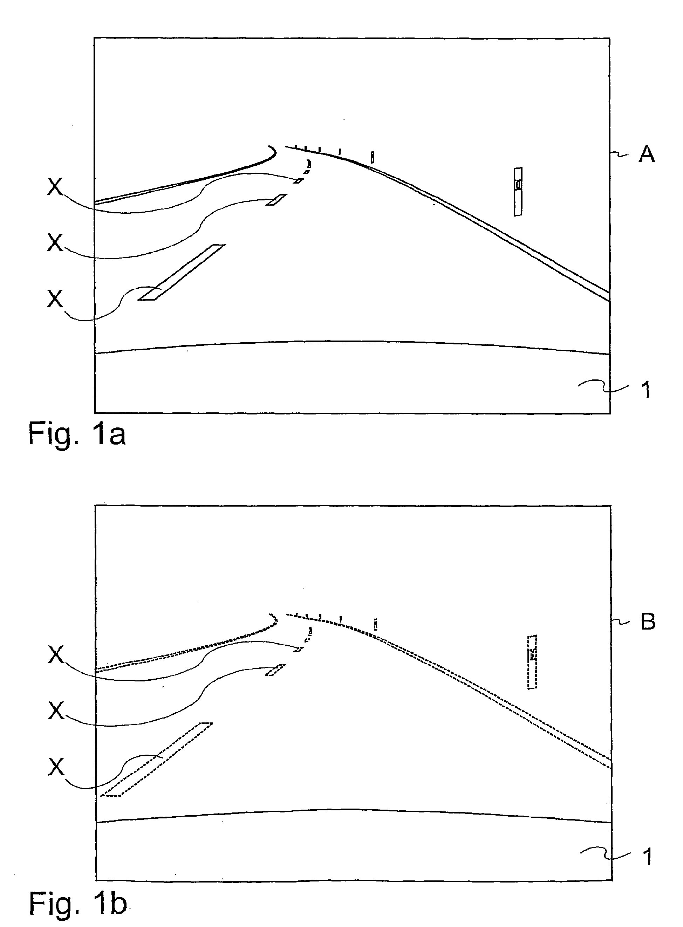

Figur 1 zeigt in den Teilfiguren 1a und 1b zwei unmittelbar nacheinander aufgenommene Bilder A und B einer Fahrzeugumgebung vor einem vorwärts fahrenden Fahrzeug 1, beispielsweise in einer Auflösung von 640 x 480 Pixeln. Die Bilder A, B stammen aus einer fortlaufenden Folge von Bildern, die beispielsweise mittels einer vorwärts gerichteten Kamera, z. B. eines Spurverfolgungssystems (Lane Departure Warning) des Fahrzeugs 1 aufgenommen werden. Je nach Bildauflösung und vorgegebener Einstellung der Kamera können die Bilder mit größerer bzw. kleinerer Auflösung aufgenommen werden.

Zwischen der Aufnahme zweier aufeinanderfolgender Bilder A, B liegt ein zeitlicher Abstand $\Delta t$, der insbesondere durch die Aufnahmegeschwindigkeit der Kamera bestimmt wird. In diesem Beispiel werden Bilder mit einer Frequenz von 25 Bildern pro Sekunde aufgenommen. Der zeitliche Abstand $\Delta t$ zwischen zwei Bildern A, B beträgt somit 40 ms. Im Aufnahmebereich der zumindest teilweise horizontal ausgerichteten Kamera sind bei einer Aufnahme sowohl nach vorne als auch nach hinten in der Fahrzeugumgebung als Objekte X Fahrbahnmarkierungen identifizierbar.

Aufgrund des zeitlichen Abstandes $\Delta t$ zwischen den Aufnahmen der Bilder A, B und der Vorwärtsbewegung des Fahrzeugs 1 erscheinen die Mittelliniensegmente der Fahrbahnmarkierungen in dem zeitlich nachfolgend aufgenommenen Bild B der Figur 1b näher zum Fahrzeug 1 versetzt und aufgrund der perspektivischen Aufnahme vergrößert im Vergleich zum zeitlich vorangegangenen Bild A der Figur 1a.

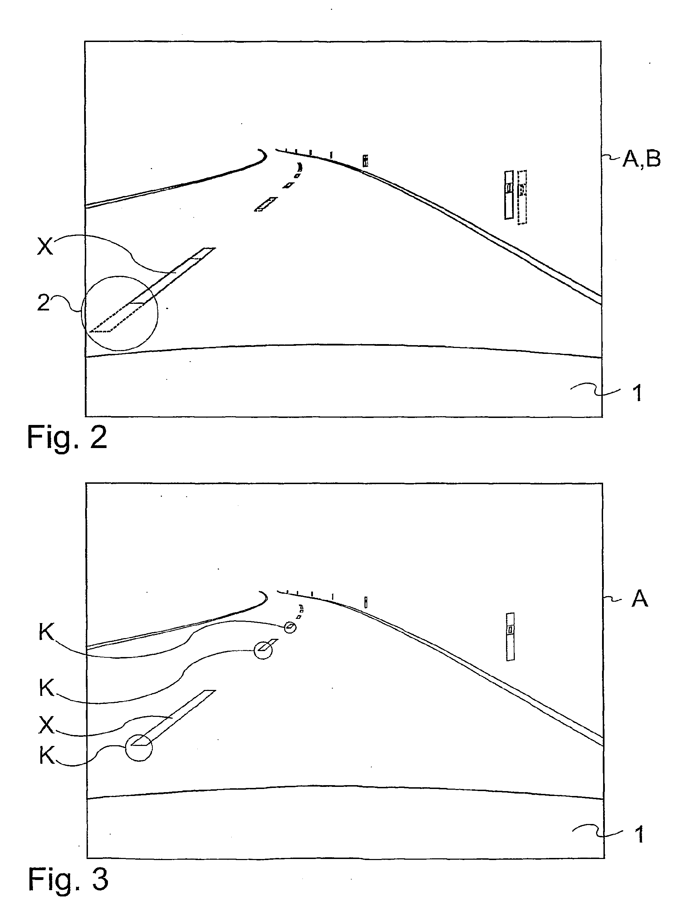

Mittels bildverarbeitender Prozesse wird das jeweils nächstliegende Mittelliniensegment als Objekt X zunächst in beiden Bildern A, B identifiziert. Dabei wird beispielsweise eine Variation der Relativposition und der Größe des Objektes X für einen Mustervergleich verwendet. Vorzugsweise wird dazu, um Startwerte für eine erwartete Relativposition und/oder eine erwartete Größe des Objekts X für ein schnelles Identifizieren und Lokalisieren des Objekts X zu ermitteln, die Bewegung im Zeitraum $\Delta t$ anhand der zuletzt ermittelten Geschwindigkeit extrapoliert. Zusätzlich oder alternativ kann eine Information über die aktuelle Geschwindigkeit aus einer weiteren Quelle wie beispielsweise der Messung der Raddrehzahl verwendet werden. Beim Identifizieren wird das Objekt X lokalisiert, indem die Positionen und/oder die Größen des Objekts X in beiden Bildern A, B ermittelt werden. Die Unterschiede hinsichtlich der Position beziehungsweise der Größe des Objekts X werden als Veränderungen 2 bestimmt, wie in Figur 2 dargestellt.

In Figur 2 sind zur Verdeutlichung die beiden Bilder A, B aus Figur 1a und 1b überlagert dargestellt. Erkennbar sind die Veränderungen 2 in Form einer Verschiebung und Vergrößerung des nächstliegenden Mittelliniensegments.

Aus den ermittelten Veränderungen 2 wird ein Geschwindigkeits- oder Bewegungsvektor zwischen den Positionen des Objekts X in den beiden Bildern A, B bestimmt. Dabei wird der Bewegungsvektor anhand der vorgegebenen Kamerakalibrierung skaliert. Anhand des Bewegungsvektors und des zeitlichen Abstandes $\Delta t$ zwischen den aufgenommenen Bildern A, B wird dann die Geschwindigkeit, beispielsweise die Längs- und/oder Quergeschwindigkeit des Fahrzeugs 1 ermittelt.

Nachfolgend wird das Verfahren anhand eines Beispiels näher erläutert. Unter der Annahme, dass die Mittelliniensegmente etwa 6 m lang sind, wird anhand der maximalen Größe der Mittelliniensegmente von etwa 150 Pixeln bestimmt, dass ein Pixel des Bildes A oder B minimal 4 cm entspricht. Das zweitnächste Mittelliniensegment hat auf den Bildern A oder B eine Länge von 22 Pixeln, was etwa 27 cm pro Pixel entspricht. Mit einer Kamera der in diesem Beispiel verwendeten Auflösung ist somit eine Bewegung auf etwa 4 cm pro Bildwechsel genau bestimmbar. Die Geschwindigkeit des Fahrzeugs 1 kann gemäß diesem Beispiel mit einer Genauigkeit von maximal:

$$0{,}04 \text{ m} * 25 \text{ s}^{-1} = 1 \text{ m/s} = 3{,}6 \text{ km/h}$$

bestimmt werden. In dem Fall, dass das nächstliegende Mittelliniensegment gerade aus dem Sichtfeld der Kamera hinaus gelangt ist, ist eine Bewegung nur auf etwa 16 cm pro Bildwechsel genau bestimmbar. Dies entspricht einer Genauigkeit der bestimmten Geschwindigkeit von:

$$0{,}16 \text{ m} * 25 \text{ s}^{-1} = 4 \text{ m/s} = 14{,}4 \text{ km/h}.$$

Die ermittelten Werte können in einer alternativen Ausführungsform über mehrere Bilder A bis Z hinweg gemittelt werden, um den Messfehler zu verringern. Dadurch wird jedoch auch die Aktualität der Werte vermindert. Durch eine Mittelung über 15 Bilder, was in diesem Beispiel etwas mehr als einer halben Sekunde entspricht, sind Genauigkeiten von etwa 0,25 km/h bis etwa 1 km/h erreichbar.

Für eine schnelle und sichere Bildverarbeitung werden darüber hinaus die Kanten K der Enden und/oder Anfänge der Mittelliniensegmente als Objekte X identifiziert. Hierzu werden die Bilder A, B zuvor Hochpass gefiltert. Figur 3 zeigt dazu beispielhaft das Ergebnis einer Hochpassfilterung eines aufgenommenen Bildes. Gut erkennbar und mittels Bildverarbeitung leicht identifizierbar und lokalisierbar sind die Kanten K der Enden der Mittelliniensegmente.

In einer weiteren Ausführungsform können mehrere Objekte X verarbeitet und zur Ermittlung der Geschwindigkeit über Grund verwendet werden. Bei mehreren Objekte X in beiden Bildern A, B werden dabei für jedes Objekt X die Fehler seiner Veränderungen 2 zwischen den Bildern A und B ermittelt. Die Fehler werden beispielsweise anhand der Unschärfe der Objekte X in den Bildern A, B bestimmt. Die Geschwindigkeit des Fahrzeugs 1 wird dann beispielsweise ausschließlich anhand der Veränderungen 2 desjenigen Objekts X ermittelt, für dessen Veränderungen 2 die geringsten Fehler ermittelt werden.

In einem anderen Verfahren werden in zeitlichen Abständen Δt Bilder A, B der Fahrbahnoberfläche mittels einer rückwärts gerichteten Kamera (auch Rückfahrkamera genannt) des Fahrzeugs 1 aufgenommen und ein Bewegungsvektor aus einer ebenen Verschiebung von Bildbereichen ermittelt. Dazu werden beispielsweise mehrere Korrelationen zu verschiedenen Relativpositionen eines Bildbereiches eines früheren Bildes A mit einem späteren Bild B berechnet. Als Bildbereich wird beispielsweise ein rechteckiger, in der Mitte des Bildes A liegender Bereich verwendet. Wird der Bildbereich als Objekt X an einer Position im später aufgenommenen Bild B identifiziert, ergibt sich der Bewegungsvektor aus der relativen Position des identifizierten Bildbereichs zum späteren Bild B. Anhand des Abbildungsmaßstabs der rückwärts gerichteten Kamera wird dann die Geschwindigkeit des Fahrzeugs 1 aus dem Bewegungsvektor bestimmt. Da rückwärts gerichteten Kameras in der Regel mit einem Weitwinkelobjektiv ausgestattet sind, ist die Quergeschwindigkeit mit größerer Genauigkeit bestimmbar als bei einer vorwärts gerichteten Kamera. Eine rückwärts gerichtete Kamera weist zudem in der Regel ein schräg nach unten gerichtetes Sichtfeld auf, aufgrunddessen teilweise die Fahrbahn direkt hinter dem Heck des Fahrzeugs 1 abbildbar ist, wodurch Fahrbahnstrukturen wesentlich besser erkennbar sind als bei einer vorwärts gerichteten Kamera.

Die in diesem Verfahren erforderlichen Korrelationskoeffizienten sind in bekannter Weise bestimmbar gemäß:

$$S(i,j) = \sum_{m=1}^{M} \sum_{n=1}^{N} \frac{I(i+m, j+n) \cdot R(m,n)}{\sqrt{S_I^2(i,j) \cdot S_R^2}} \qquad [1]$$

mit

$$S_I^2(i,j) = \sum_{m=1}^{M} \sum_{n=1}^{N} I^2(i+m, j+n) \qquad [2]$$

und

$$S_R^2 = \sum_{m=1}^{M} \sum_{n=1}^{N} R^2(m,n) \ . \qquad [3]$$

Das Maximum dieser Korrelationsfläche stellt die Position der besten Übereinstimmung zwischen dem Teilbild und dem späteren Bild B dar.

Um die Identifikation und Lokalisierung eines Teilbilds zu beschleunigen, werden anstelle der Korrelationskoeffizienten vorzugsweise als Näherung der Korrelationsfläche die Summen der quadratischen Abweichungen berechnet gemäß:

$$D(i,j) = \sum_{m=1}^{M} \sum_{n=1}^{N} \left[ I(i+m, j+n) - R(m,n) \right]^2 \ . \qquad [4]$$

Eine perfekte Übereinstimmung an einer Position *(i,j)* ergäbe den Wert 0 für diese Position. Um die relative Position des Bildbereichs und damit den Bewegungsvektor zu ermitteln, wird zweckmäßigerweise das Minimum der Fläche der Summen von quadratischen Abweichungen bestimmt.

Zur Verbesserung der Genauigkeit ist es auch möglich, mehrere Kameras eines Fahrzeugs 1 gleichzeitig zu verwenden. Zweckmäßigerweise werden die jeweils ermittelten Geschwindigkeitswerte gewichtet und/oder gemittelt, um einen möglichst genauen Gesamtwert zu erhalten. Auch eine herkömmliche Messung der Raddrehzahl kann dabei verwendet werden.

Bezugszeichenliste

1    Fahrzeug
2    Veränderung

A    Bild
B    Bild
K    Kante
X    Objekt

**Patentansprüche**

1.  Verfahren zur Ermittlung einer Geschwindigkeit eines Fahrzeugs (1), wobei

    o mindestens zwei Bilder (A, B) einer Fahrzeugumgebung mittels einer zumindest teilweise horizontal ausgerichteten Monokamera des Fahrzeugs (1) zeitlich nacheinander aufgenommen und
    o zwischen den Bildern (A, B) Veränderungen(2) einer Lage und/oder einer Größe wenigstens einer in den Bildern zumindest teilweise enthaltenen Fahrbahnmarkierung, die mindestens ein Ende eines Mittelliniensegments enthält, ermittelt werden und
    o aus den Veränderungen eine Geschwindigkeit des Fahrzeugs (1) relativ zu der Fahrbahnmarkierung (X) ermittelt wird.

2.  Verfahren nach einem der vorhergehenden Ansprüche, **dadurch gekennzeichnet, dass** eine Längs- und/oder eine Quergeschwindigkeit des Fahrzeugs (1) ermittelt wird.

3.  Verfahren nach Anspruch 2, **dadurch gekennzeichnet, dass** der Bewegungsvektor anhand einer Kalibrierung der Kamera perspektivisch korrigiert und skaliert wird.

4.  Verfahren nach einem der vorhergehenden Ansprüche, **dadurch gekennzeichnet, dass** die Bilder(A, B) zum Identifizieren und/oder Lokalisieren der Fahrbahnmarkierung (X) und/oder der Veränderungen (2) gefiltert werden.

5.  Verfahren nach einem der vorhergehenden Ansprüche, **dadurch gekennzeichnet, dass** Bilder (A, B) aus einer fortlaufend hintereinander aufgenommenen Folge verwendet werden.

6.  Verfahren nach Anspruch 5, **dadurch gekennzeichnet, dass** die Veränderungen aus zwei unmittelbar aufeinanderfolgenden Bildern (A, B) ermittelt werden.

7.  Verfahren nach Anspruch 6, **dadurch gekennzeichnet, dass** als Kamera eine Kamera eines Spurverfolgungssystems und/oder eine Rückfahrkamera und/oder eine Kamera für einen toten Winkel verwendet wird.

8.  Vorrichtung zur Durchführung eines Verfahrens nach einem der Ansprüche 1 bis 7, **gekennzeichnet durch** eine Kamera eines Fahrzeugs (1) und eine mit der Kamera verbundene Auswerteeinheit, wobei die Auswerteeinheit derart ausgestaltet ist, dass sie in der Lage ist:

    - zwischen zwei zeitlich nacheinander aufgenommenen Bildern (A, B) der Kamera Veränderungen der Lage und/oder der Größe wenigstens einer in den Bildern zumindest teilweise enthaltenen Fahrbahnmarkierung, die mindestens ein Ende eines Mittelliniensegments enthält, zu bestimmen
    und aus den Veränderungen eine Geschwindigkeit des Fahrzeugs (1) relativ zu der Fahrbahnmarkierung (X) zu ermitteln.

9.  Vorrichtung nach Anspruch 8, **dadurch gekennzeichnet, dass** die Kamera eine Kamera eines Spurverfolgungssystems und/oder eine Rückfahrkamera und/oder eine Kamera für einen toten Winkel ist.

## Claims

1. A method for determining a speed of a motor vehicle (1), wherein
   at least two images (A, B) of an area surrounding the motor vehicle are recorded by means of an at least partially horizontally aligned mono camera of the motor vehicle (1) in time succession, and
   between the mages (A, B) changes (2) of a position and/or a size of at least one roadway marking contained at least partially in the images, which contains at least one end of a middle line segment are calculated, and
   from the changes, a speed of the motor vehicle (1) is determined relative to the roadway marking (X).

2. A method according to any one of the preceding claims, **characterized in that** a longitudinal and/or transverse speed of the motor vehicle (1) is determined.

3. A method according to claim 2, **characterized in that** the movement vector is perspectively corrected and scaled on the basis of a calibration of the camera.

4. A method according to any one of the preceding claims, **characterized in that** the images (A, B) are filtered in order to identify and/or localise the roadway marking (X) and/or the changes (2).

5. A method according to any one of the preceding claims, **characterized in that** the images (A, B) are used from a sequence which has been recorded continuously in succession.

6. A method according to claim 5, **characterized in that** the changes are calculated from two images (A, B) which have been recorded immediately in succession.

7. A method according to claim 6, **characterized in that** a camera of a lane tracking system and/or a reverse drive camera and/or a camera for a blind angle are used as a camera.

8. A device for conducting a method according to any one of claims 1 to 7, **characterized by** a camera of a motor vehicle (1) and an evaluation unit which is connected to the camera, wherein the evaluation unit is designed in such a manner that it is capable of:

   - calculating between two images (A, B) recorded by the camera in time succession, changes in the position and/or the size of at least one roadway marking which is at least partially contained in the images, which contains at least one end of a middle line segment,
   - and from the changes, to calculate a speed of the motor vehicle (1) relative to the roadway marking (X).

9. A device according to claim 8, **characterized in that** the camera is a camera of a lane tracking system and/or a reverse drive camera and/or a camera for a blind angle.

## Revendications

1. Procédé de détermination d'une vitesse d'un véhicule (1), où

   - au moins deux images (A, B) d'un environnement du véhicule sont successivement enregistrées au moyen d'une monocaméra du véhicule (1) orientée au moins en partie horizontalement, et où
   - des variations (2) entre les images (A, B) d'une position et/ou d'une grandeur d'au moins un marquage de chaussée au moins partiellement contenu dans les images et comprenant au moins une extrémité d'un segment de ligne médiane sont saisies, et où
   - une vitesse du véhicule (1) relative au marquage de chaussée (X) est déterminée à partir des variations.

2. Procédé selon l'une des revendications précédentes, **caractérisé en ce qu'**une vitesse longitudinale et/ou une vitesse transversale du véhicule (1) sont déterminées.

3. Procédé selon la revendication 2, **caractérisé en ce que** le vecteur de déplacement est corrigé en perspective et gradué sur la base d'un calibrage de la caméra.

4. Procédé selon l'une des revendications précédentes, **caractérisé en ce que** les images (A, B) sont filtrées pour l'identification et/ou la localisation du marquage de chaussée (X) et/ou des variations (2).

5.  Procédé selon l'une des revendications précédentes, **caractérisé en ce que** sont exploitées des images (A, B) d'une séquence d'images enregistrées successivement en continu.

6.  Procédé selon la revendication 5, **caractérisé en ce que** les variations sont déterminées à partir de deux images (A, B) immédiatement consécutives.

7.  Procédé selon la revendication 6, **caractérisé en ce que** la caméra utilisée est une caméra d'un système de suivi de voie et/ou une caméra de marche arrière et/ou une caméra pour un angle mort.

8.  Dispositif pour l'exécution d'un procédé selon l'une des revendications 1 à 7, **caractérisé par** une caméra d'un véhicule (1) et une unité d'analyse reliée à la caméra, l'unité d'analyse étant conçue pour être en mesure de :

    - saisir, entre deux images (A, B) de caméra successivement enregistrées, des variations de la position et/ou de la grandeur d'au moins un marquage de chaussée au moins partiellement contenu dans les images et comprenant au moins une extrémité d'un segment de ligne médiane,
    - et déterminer à partir des variations une vitesse du véhicule (1) relative au marquage de chaussée (X).

9.  Dispositif selon la revendication 8, **caractérisé en ce que** la caméra est une caméra d'un système de suivi de voie et/ou une caméra de marche arrière et/ou une caméra pour un angle mort.

Fig. 1a

Fig. 1b

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040221790 A1
- FR 2609174 A
- DE 19507957 C1
- JP 08094380 B

**In der Beschreibung aufgeführte Nicht-Patentliteratur**

- **J. HAUS ; R. SCHÄFER.** Gitteroptische Sensorik zur berührungslosen Längs- und Quergeschwindigkeits-messung. *Gitteroptische Sensorik zur berührungslosen Längs-und Quergeschwindigkeits-messung,* 2003, 25